(19) Europäisches Patentamt
European Patent Office
Office européen des brevets

(11) EP 0 154 678 B2

(12) NEUE EUROPÄISCHE PATENTSCHRIFT

(45) Veröffentlichungstag und Bekanntmachung des Hinweises auf die Entscheidung über den Einspruch:
**09.12.1998 Patentblatt 1998/50**

(45) Hinweis auf die Patenterteilung:
**26.08.1987 Patentblatt 1987/35**

(21) Anmeldenummer: **84112971.1**

(22) Anmeldetag: **27.10.1984**

(51) Int Cl.[6]: **C08G 18/80**, C08G 18/10, B01F 17/00, C09B 67/00

(54) **Als Dispergiermittel geeignete Additionsverbindungen, Verfahren zu ihrer Herstellung, ihre Verwendung und damit beschichtete Feststoffe**

Addition compounds suited as dispersing agents, process for their preparation, their use and solid materials coated with them

Composés d'addition utilisables comme agents de dispersion, procédé de leur préparation, leur utilisation et matériaux solides revêtus par ceux-ci

(84) Benannte Vertragsstaaten:
**AT BE CH DE FR GB IT LI LU NL SE**

(30) Priorität: **27.01.1984 DE 3402774**

(43) Veröffentlichungstag der Anmeldung:
**18.09.1985 Patentblatt 1985/38**

(73) Patentinhaber: **Byk-Chemie GmbH**
**D-46463 Wesel (DE)**

(72) Erfinder:
- **Haubennestel, Karlheinz**
  **D-4230 Wesel 1 (DE)**
- **Kramp, Peter, Dr.**
  **D-5173 Aldenhoven (DE)**

(74) Vertreter: **Türk, Gille, Hrabal**
**Brucknerstrasse 20**
**40593 Düsseldorf (DE)**

(56) Entgegenhaltungen:

| | |
|---|---|
| **EP-A- 74 080** | **DE-A- 2 312 301** |
| **DE-A- 2 438 414** | **FR-A- 2 102 299** |
| **FR-A- 2 241 597** | **US-A- 3 684 771** |
| **US-A- 3 970 687** | **US-A- 4 032 698** |
| **US-A- 4 155 892** | |

Bemerkungen:
Die Akte enthält technische Angaben, die nach dem Eingang der Anmeldung eingereicht wurden und die nicht in dieser Patentschrift enthalten sind.

EP 0 154 678 B2

## Beschreibung

Die vorliegende Erfindung betrifft als Dispergiermittel geeignete Additionsverbindungen oder deren Salze, erhältlich durch Umsetzung von Polyisocyanaten, Hydroxyverbindungen, Zerewitinoff-Wasserstoff sowie mindestens eine basische Gruppe enthaltenden Verbindungen mit einem pKa-Wert von 5 bis 14 und gegebenenfalls Verbindungen, die Aminwasserstoff enthalten, gegebenenfalls in Anwesenheit von Lösungsmitteln und gegebenenfalls in Gegenwart von Umsetzungskatalysatoren.

Die Erfindung betrifft weiterhin Verfahren zur Herstellung dieser Additionsverbindungen, deren Verwendung als Dispergiermittel und in flüssige Systeme einzuarbeitende pulver- oder faserförmige Feststoffe, die mit solchen Dispergiermitteln beschichtet sind.

Um Feststoffe in flüssige Medien einzubringen, sind hohe mechanische Kräfte notwendig. Dies hängt in hohem Mass von der Benetzbarkeit des Feststoffs durch das umgebende Medium sowie von der Affinität zu diesem Medium ab. Um diese Dispergierkräfte zu reduzieren, ist es üblich, Dispergiermittel anzuwenden, welche die Einarbeitung erleichtern. Hierbei handelt es sich meistens um oberflächenaktive Stoffe, auch Tenside genannt, von anionen- oder kationenaktiver sowie nicht-ionogener Struktur. Diese Stoffe werden in relativ geringen Zusatzmengen, entweder auf den Feststoff direkt aufgebracht oder dem Dispergiermedium zugesetzt. Durch ein solches Tensid wird der Dispergieraufwand wesentlich reduziert.

Bekannt ist weiterhin, dass diese Feststoffe nach dem Dispergierprozess wieder zum Reagglomerieren neigen, was den zuvor aufgewendeten Dispergieraufwand zunichte macht und zu gravierenden Problemen führt. Dieses Phänomen erklärt man sich durch London/van der Waal's Kräfte, durch welche sich die Feststoffe gegenseitig anziehen. Um diese Anziehungskräfte zu überlagern, müssen Adsorptionsschichten auf die Feststoffe aufgebracht werden. Dies geschieht durch die Verwendung solcher Tenside.

Während und nach der Dispergierung tritt jedoch eine Wechselwirkung des umgebenden Mediums mit dem Feststoffpartikel ein, und es erfolgt eine Desorption des Tensides unter Austausch gegen das, in höherer Konzentration vorliegende, umgebende Medium. Dieses umgebende Medium ist jedoch in den meisten Fällen nicht in der Lage, solche stabilen Adsorptionsschichten aufzubauen, und das gesamte System bricht zusammen. Dies macht sich bemerkbar durch Viskositätsanstieg in flüssigen Systemen, Glanzverluste und Farbtonverschiebungen in Lacken und Beschichtungen, ungenügende Farbkraftentwicklung in pigmentierten Kunststoffen, sowie Verringerung der mechanischen Festigkeit in verstärkten Kunststoffen.

Zur Lösung dieser Aufgabe sind Dispergiermittel z.B. in den US-A-4 032 698, GB-A-1 393 401 und GB-A-1 393 402 vorgeschlagen. Diese Dispergiermittel führen jedoch nur zu Teillösungen, insbesondere im Hinblick auf die flokkulationsfreie Mischbarkeit von verschiedenen Pigmenten untereinander, wie organische Pigmente und anorganische Pigmente. Auch neigen die nach den beschriebenen Verfahren hergestellten Pigmentpasten z.B. nach Einsatz in Lakken zu Wechselwirkungen mit dem umgebenden Medium. Es kann damit angenommen werden, dass die aufgebauten Adsorptionsschichten keine genügende Stabilität gegen Desorption aufweisen.

Die FR-A-2 241 597 beschreibt die Herstellung und Verwendung von Dispergiermitteln, die sich im wesentlichen nicht von den dem Fachmann bekannten Urethanharzen unterscheiden. Gemäss FR-A-2 241 597 werden Isocyanate mit mindestens 2 NCO-Gruppen mit unterschiedlichen NCO-reaktiven Verbindungen, vorzugsweise Diolen und Monohydroxy-Verbindungen so umgesetzt, dass Polyurethane entstehen, welche nach der Umsetzung keine reaktiven Gruppen mehr enthalten. Bei Verwendung dieser Verbindungen als Dispergiermittel bildet sich offenbar keine stabile Adsorptionsschicht der Dispergiermittel am Pigment oder an sonstigen zu dispergierenden Feststoffen. Dies führt zu einer Instabilität (Flockulation) der Dispersionen, was durch Versuche bestätigt wurde.

Der vorliegenden Erfindung liegt die Aufgabe zugrunde, Dispergiermittel zu finden, die die obigen Nachteile nicht oder in wesentlich geringerem Umfange aufweisen, und die insbesondere zu Dispersionen von Feststoffen führen, die nach dem Dispergierprozess nicht oder nur in untergeordnetem Ausmass zum Reagglomerieren neigen.

Es wurde nun überraschenderweise gefunden, dass diese Aufgabenstellung mit den nachfolgend definierten Additionsprodukten gelöst werden kann.

Gegenstand der Erfindung sind demgemäss als Dispergiermittel geeignete Additionsverbindungen oder deren Salze, gemäß Anspruch 1.

Gegenstand der Erfindung ist weiterhin das Verfahren zur Herstellung der Additionsverbindungen gemäß Anspruch 6.

Weiterhin ist Gegenstand der Erfindung die Verwendung der genannten Additionsverbindungen als Dispergiermittel. Gegenstand der Erfindung sind weiterhin in flüssige Systeme einzuarbeitende pulver- oder faserförmige Feststoffe, die mit diesen Additionsverbindungen als Dispergiermittel beschichtet sind. Pulver- oder faserförmige Feststoffe sind solche, wie sie gemäss dem Stand der Technik mit Dispergiermitteln beschichtet wurden, insbesondere organische und anorganische Pigmente, die in Anstrichmitteln, Überzugsmitteln, Formmassen oder sonstigen Kunststoffen eingesetzt werden, anorganische oder organische Füllstoffe, die zum Füllen oder Verstärken von Anstrichmitteln, Überzugsmitteln, Formmassen oder sonstigen Kunststoffen eingesetzt werden. Eine Untergruppe von derartigen Füllstoffen

sind Fasern organischer und/oder anorganischer Natur, die ebenfalls als Füllstoffe oder Verstärkungsstoffe verwendet werden. Derartige pulver- oder faserförmige Feststoffe mit einer Beschichtung von Dispergiermitteln gemäss der Erfindung werden in an sich bekannter Weise hergestellt, wobei anstelle der nach dem Stand der Technik bekannten Dispergiermittel diejenigen gemäss der Erfindung eingesetzt werden. Auf dem Gebiet der Faserstoffe nennt man diese Dispergiermittel häufig auch Schlichten. Dazu können die Feststoffe z.B. in einem Wirbelbett mit einer Lösung oder Emulsion der Additionsverbindungen gemäss der Erfindung beschichtet werden. Das Lösungs- oder Emulsionsmittel kann dann entfernt werden, es kann aber auch im Gemisch verbleiben, so dass Pasten erhalten werden. Eine andere Möglichkeit besteht z.B. darin, dass die zu beschichtenden Feststoffe in einem flüssigen Medium angeschlämmt und dieser Anschlämmung die Additionsverbindungen gemäss der Erfindung zugesetzt werden. Auch hier kann das Anschlämmen in der Weise erfolgen, dass eine verarbeitbare Paste erhalten wird, wobei naturgemäss das flüssige Medium zum Anschlämmen angepasst ist dem späteren Verwendungszweck dieser Paste, z.B. der Pigmentpaste.

Die Verwendung der Additionsverbindungen gemäss der Erfindung als Dispergiermittel kann aber auch - wie gemäss dem Stand der Technik für bekannte Dispergiermittel - so erfolgen, dass die Dispergiermittel irgendwelchen Systemen, z.B. Lakken, Kunststoffmischungen und dergleichen zugesetzt werden, die die einzuarbeitenden Feststoffe, wie Pigmente, Füllstoffe, Fasern, bereits dispergiert enthalten.

Für die Herstellung der Additionsverbindungen gemäss der Erfindung werden Als Polyisocyanate die auf diesem technischen Gebiet nach dem Stand der Technik brauchbaren Verbindungen eingesetzt. Sie müssen jedoch eine mittlere Funktionalität von 3 bis 6 haben. Beispiele für solche Polyisocyanate sind solche, die z.B. durch Addition von Diisocyanaten an Polyole erhalten werden können wie

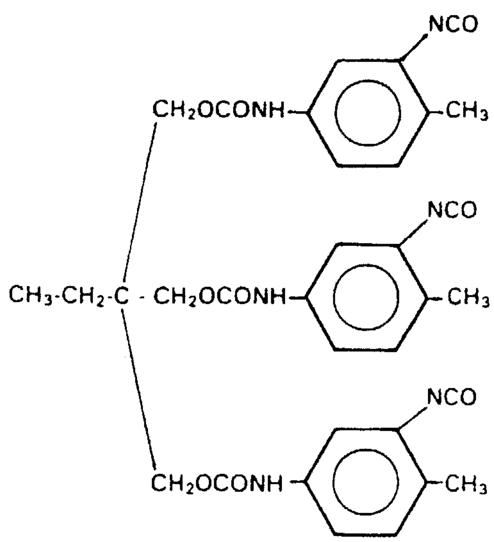

Handelsprodukt: Desmodur L (eingetragenes Warenzeichen)
oder die durch Biuretreaktion aus Diisocyanaten erhalten werden können wie

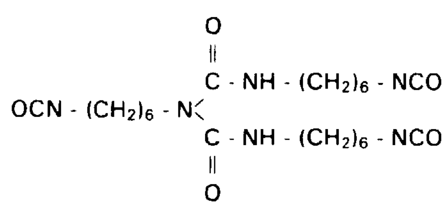

Handelsprodukt: Desmodur N (eingetragenes Warenzeichen)
oder aber die durch Cyclisierung von Diisocyanaten erhältlichen Polyisocyanate mit Isocyanurat Grundstruktur

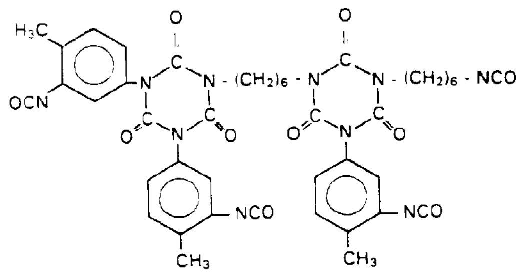

Handelsprodukt: Desmodur HL (eingetragenes Warenzeichen)

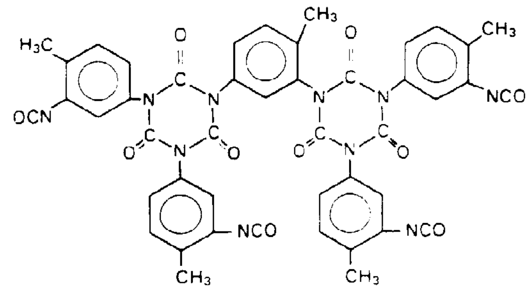

Handelsprodukt: Desmodur IL (eingetragenes Warenzeichen)

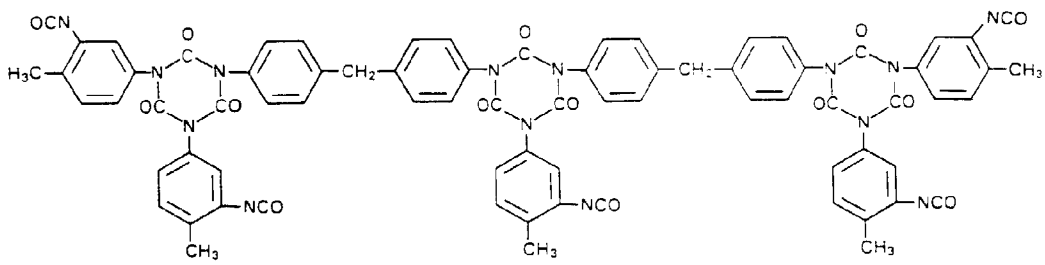

Handelsprodukt: Polyurene KC (eingetragenes Warenzeichen)

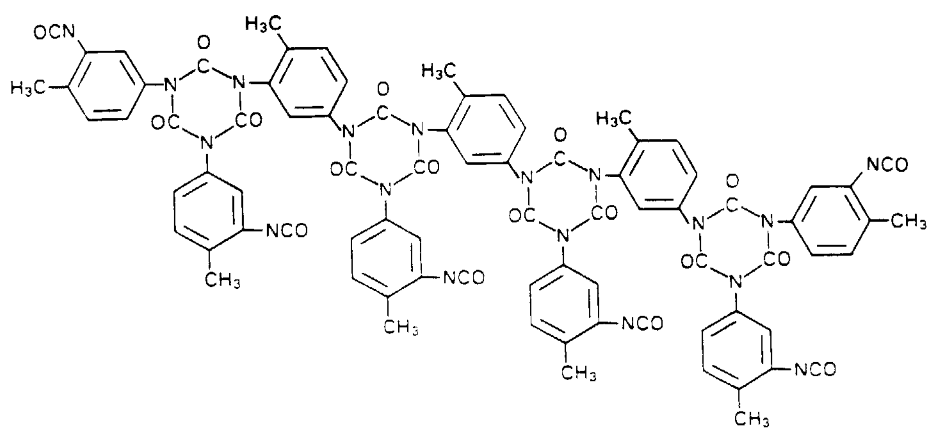

Handelsprodukt: Polyurene HR (eingetragenes Warenzeichen)

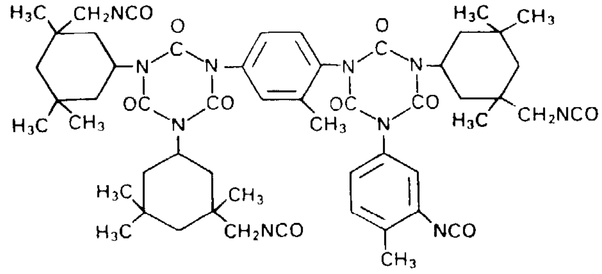

Toluylendiisocyanat-isophorondiisocyanat-isocyanurat (Firma SAPICI)

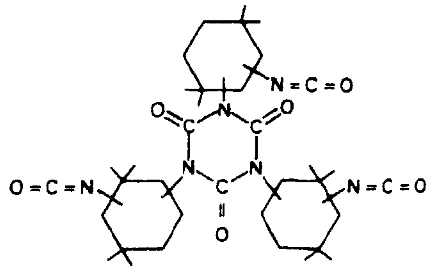

Trimeres Isophorondiisocyanat (Isocyanurat T1890 der Firma Chemische Werke Hüls)

Wie bereits oben dargelegt, handelt es sich bei den einschlägigen Verbindungen um Handelsprodukte, die häufig nicht in reiner Form die obigen chemischen Formeln aufweisen, sondern die Gemische von gewissen Verbindungen ähnlicher Struktur darstellen. Unter mittlerer Funktionalität wird verstanden, dass die Handelsprodukte hinsichtlich der Isocyanatgruppen die angegebene Funktionalität von 3 bis 6, aufweisen. Beispielsweise bedeutet «Funktionalität von 3», dass ein Molekül im statistischen Mittel 3 freie Isocyanatgruppen enthält. Die mittlere Funktionalität kann man experimentell dadurch ermitteln, dass man das mittlere Molekulargewicht $\overline{Mn}$ bestimmt. Ausserdem bestimmt man die NCO-Zahl und errechnet daraus das NCO-Äquivalentgewicht. Die mittlere Funktionalität ist der Quotient aus dem mittleren Molekulargewicht und dem NCO-Äquivalentgewicht.

Als Monohydroxyverbindungen der Formel I können aliphatische, cycloaliphatische und/oder araliphatische Verbindungen eingesetzt werden mit jeweils 8 bis 30 Kohlenstoffatomen. Es kann auch Gemische solcher Verbindungen eingesetzt werden.

Es können geradkettige und verzweigte aliphatische oder araliphatische Verbindungen eingesetzt werden. Sie können gesättigt oder ungesättigt sein. Gesättigte Verbindungen sind bevorzugt. Die Wasserstoffatome können teilweise durch Halogene, vorzugsweise durch Fluor und/oder auch Chlor ersetzt sein. Wenn derartig substituierte Verbindungen eingesetzt werden, handelt es sich vorzugsweise um aliphatische Monoalkohole. Derartige Produkte sind im Handel erhältlich, wobei, wie dem Fachmann bekannt, die der Hydroxylgruppe nahestehenden Kohlenstoffatome in der Regel keine Halogenatome aufweisen. Beispiele für spezielle fluorierte Alkohole sind Heptadecafluorodecanol, oder $C_6F_{13}\,CH_2CH_2OH$. Die im Handel erhältlichen entsprechenden Produkte sind häufig nicht einheitlich, sondern Gemische von verschiedenen fluorierten Verbindungen, wie sie bei der technischen Synthese erhalten werden.

Als Monohydroxyverbindungen der Formel I können auch solche eingesetzt werden, die mindestens eine -O- und/oder -COO-Gruppe enthalten. Es handelt sich also um Polyether, Polyester oder gemischte Polyether-Polyester. Beispiele für Polyester sind solche, die durch Polymerisation eines Lactons, wie Propiolacton, Valerolacton, Caprolacton oder deren substituierte Derivate mittels einer Monohydroxy-Startkomponente erhalten werden können. Als Startkomponente werden Monoalkohole, zweckmässig mit 4 bis 30, vorzugsweise 4 bis 14 C-Atomen, wie n-Butanol, längerkettige, gesättigte und ungesättigte Alkohole, wie Propargylalkohol, Oleylalkohol, Linoloylalkohol, Oxoalkohole, Cyclohexanol, Phenylethanol, Neopentylalkohol, aber auch fluorierte Alkohole, wie sie oben erwähnt sind, eingesetzt. Es können auch Alkohole der zuvor beschriebenen Art und substituierte und unsubstituierte Phenole durch Alkoxilierung nach bekannten Verfahren mit Ethylenoxid und/oder Propylenoxid in Polyalkylenmonoalkyl-, aryl-, aralkyl- und cycloalkylether überführt werden und diese Monohydroxypolyether in der vorbeschriebenen Art als Starterkomponente für die Lactonpolymerisation eingesetzt werden. Jeweils können auch Gemische von vorgenannten Verbindungen eingesetzt werden.

Diese Lactonpolymerisation wird nach bekannten Verfahren, initiiert durch z.B. p-Toluolsulfonsäure oder Dibutylzinndilaurat, bei Temperaturen von etwa 100°C bis 180°C durchgeführt und gehorcht dabei folgendem Mechanismus:

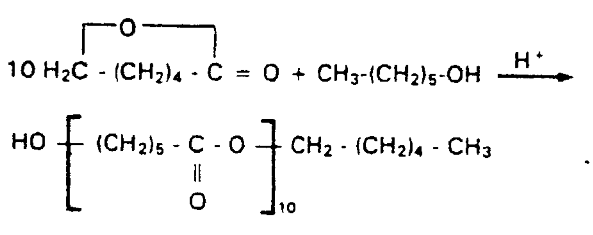


Diese Polyester haben zweckmässig ein Molekulargewicht im Bereich von etwa 350 bis 8000, vorzugsweise 500 bis 5000, wobei durch Lactonpolymerisation in der oben beschriebenen Art erhaltene Verbindungen bevorzugt sind. Als Starteralkohole werden gesättigte Monoalkohole mit 4 bis 18 C-Atomen bevorzugt.

Andere Beispiele für Polyester sind solche, die durch Kondensation eines Glykols und einer dibasischen Säure in Anwesenheit von Monohydroxyverbindungen erhalten werden können. Die Bildung von Dihydroxypolyestern kann durch Einsatz entsprechend stöchiometrischer Mengen an Monohydroxyverbindungen, wie sie oben beschrieben wurden, zurückgedrängt werden. Die Reaktion läuft nach folgendem beispielhaften Mechanismus ab:

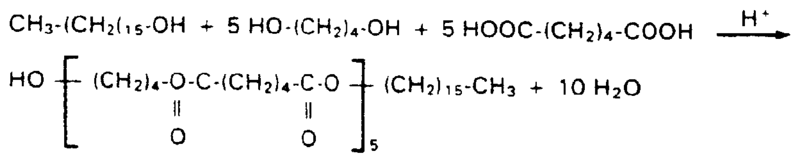

Zweckmässig haben diese Polyester ein mittleres Molekulargewicht von 400 bis 2500, vorzugsweise von 800 bis 1500.

Ein weiteres Beispiel sind Polyester, die erhältlich sind durch Kondensation einer Hydroxycarbonsäure in Anwesenheit von Monohydroxyverbindungen, wie sie oben beschrieben wurden, zur Kontrolle des Molekulargewichtes. Die Reaktion läuft nach folgendem beispielhaften Mechanismus ab:

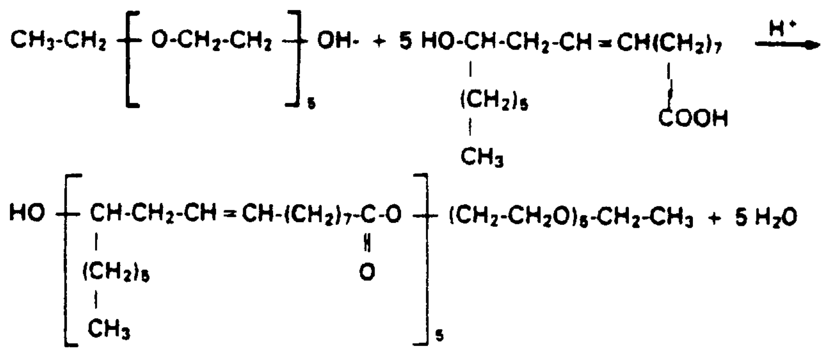

In diesem Fall beträgt das mittlere Molekulargewicht der Polyester zweckmässig 600 bis 3000, vorzugsweise 800 bis 1500.

Als Verbindungen der Formel I können auch Monohydroxypolyether eingesetzt werden, wie sie durch Alkoxylierung von Alkanolen, Cycloalkanolen und Phenolen erhalten werden. Diese Polyester haben zweckmässig ein Molekulargewicht im Bereich von etwa 350 bis 1500.

Durch die Umsetzung der Polyisocyanate mit den Verbindungen der Formel I wird also ein Teil der freien Isocyanatgruppen mit den Hydroxylgruppen der Verbindungen der Formel I zur Umsetzung gebracht. Es werden im Mittel auf je 1 Molekül Polyisocyanat mindestens 0.8, vorzugsweise etwa 1 Molekül der Formel I umgesetzt, so dass also an jedes Polyisocyanat-Molekül etwa eine Verbindung der Formel I gebunden ist. Wenn Polyisocyanate mit einer mittleren Funktionalität von mehr als 3 eingesetzt werden, kann auch eine grössere Menge an Verbindungen der Formel I eingesetzt werden. Wichtig ist, dass von jedem Molekül Polyisocyanat mindestens 2 Isocyanatgruppen nicht umgesetzt bleiben, von denen im einfachsten Fall durch die weiteren Umsetzungen jeweils etwa eine Isocyanatgruppe zur Vernetzung mit Verbindungen der Formel II dient und etwa eine Isocyanatgruppe mit Verbindungen gemäß Komponente c) des Anspruchs 1 umgesetzt wird. Je nach Funktionalität der eingesetzten Polyisocyanate und der Verbindungen der Formel II können unter sinngemässer Anwendung dieser Darlegungen die einzelnen Mengenverhältnisse ausgewählt werden.

Das so erhaltene Reaktionsprodukt wird dann mit Verbindungen der Formel umgesetzt. Diese Umsetzung kann im gleichen Gefäss wie die Umsetzung mit den Verbindungen der Formel I erfolgen. Es ist in manchen Fällen auch möglich, die Polyisocyanate mit einem Gemisch von Verbindungen der Formel I und II zur Reaktion zu bringen. Bei der Umsetzung a) mit den Verbindungen der Formel I werden also 20 bis 50% der NCO-Gruppen der ursprünglich eingesetzten Polyisocyanate umgesetzt. Die obere Grenze liegt bevorzugt bei 40%, besonders bevorzugt bei 35% und in manchen Fällen sogar bei nur 30%.

Bei der Umsetzung b) mit den Verbindungen der Formel II werden weitere 22 bis 36% der NCO-Gruppen der urpsrünglich eingesetzten Polyisocyanate umgesetzt. Die untere Grenze liegt bevorzugt bei 20%. Die obere Grenze liegt zweckmässig bei 40%, bevorzugt bei 35% und in manchen Fällen bevorzugt bei 30%.

Insgesamt werden jedoch bei den Reaktionen a) und b) mindestens 40% und höchstens 75% der NCO-Gruppen der ursprünglich eingesetzten Polyisocyanate umgesetzt, wobei die untere Grenze bevorzugt bei 45% liegt. Die obere Grenze liegt zweckmässig bei 65%, bevorzugt bei 55% und in manchen Fällen bevorzugt bei 50%.

Die Verbindungen der Formel II unterscheiden sich von denjenigen der Formel I im wesentlichen dadurch, dass sie zwei oder drei funktionelle Gruppen enthalten, die mit den Isocyanatgruppen reagieren. Bevorzugt sind diese funktionellen Gruppen Hydroxylgruppen, weil diese Verbindungen leicht zugänglich und im Handel erhältlich sind und die erhaltenen Reaktionsprodukte gut löslich in Lösungsmitteln sind, die beim späteren Einsatz der Dispergiermittel gemäss der Erfindung zur Anwendung kommen.

Beispiele für Verbindungen der Formel II sind Diole und Triole bzw. Diame, Dialkanolamine, Monoalkanolamine mit 2 bis 12 C-Atomen, Dihydroxydialkylsulfide und Dihydroxysulfone, wie Butandiol, Hexandiol, Cyclohexandimethanol, Neopentylglykol, Ethylenglykol, alkylsubstituierte Dialkanolamine, Glycerin, Trimethylolpropan, Fettsäuredialkanolamide, Thiodiglykol, Di(4-Hydroxyphenyl)-sulfon. Eine bevorzugte Gruppe von Verbindungen der Formel II sind Polyoxyalkylenglykole zweckmässig mit Alkylenteilen von 2 bis 4, vorzugsweise 2 Kohlenstoffatomen, und vorzugsweise mit Molekulargewichten im Bereich von zweckmässig 400 bis 2000, vorzugsweise 600 bis 1500. Ethoxilate mit 3 Hydroxylgruppen erhält man durch Polymerisation unter Verwendung von trifunktionellen Alkoholen als Starterkomponente. Bevorzugt als Polyoxyalkylenglykole sind Polyethylenglykole.

Als Verbindungen der Formel II können auch solche eingesetzt werden, die durch Polymerisation eines Lactons, wie es bereits oben erwähnt wurde, mittels Di- oder Trihydroxy-Startkomponenten erhalten werden können. Zweckmässig haben diese Polyesterpolyole ein mittleres Molekulargewicht $\overline{Mn}$ von 800 bis 2000. Als Startkomponente ist Butandiol oder Ethylenglykol bevorzugt. Es können aber auch die oben genannten Diole oder Triole als Startkomponenten in Frage kommen.

Die Verbindungen der Formel II bewirken eine Vernetzung zwischen den Reaktionsprodukten aus Polyisocyanat und Verbindungen der Formel I. Im einfachsten Falle werden die Ausgangsprodukte in solchen Mengen eingesetzt, dass die Verbindungen der Formel II das Zentrum des Moleküls darstellen, und dass an die Verbindungen der Formel II über die Gruppen E die Polyisocyanate gebunden sind, deren verbleibende Isocyanatgruppen mit Verbindungen der Formel I und gemäß Komponente c) des Anspruchs 1 umgesetzt sind bzw. werden. Es kann naturgemäss auch eine gewisse Übervernetzung oder Untervernetzung vorliegen. Deshalb können 0.8 n bis 1.1 n (n hat die gleiche Bedeutung wie in Formel II) Moleküle Polyisocyanat auf ein Molekül der Formel II entfallen.

Eine Übervernetzung kann in gewissem Umfang dadurch verhindert werden, dass in verdünnten Lösungen in stark polaren, aprotischen Lösungsmitteln gearbeitet wird wie Dimethylformamid, Dimethylacetamid und N-Methylpyrrolidon.

Die so erhaltenen Reaktionsprodukte werden mit Verbindungen gemäß Komponente c) des Anspruchs 1 in einer solchen Menge umgesetzt, dass auf jede verbleibende in den Stufen a) und b) noch nicht umgesetzte Isocyanatgruppe mindestens ein Molekül entfällt. Wenn die Verbindungen gemäß Komponente c) des Anspruchs 1 nur eine Gruppe enthalten, die mit den Isocyanatgruppen reagieren kann, ist ein Überschuss nicht erforderlich; vielmehr wird auf jede noch nicht umgesetzte Isocyanatgruppe etwa 1 Molekül gemäß Komponente c) des Anspruchs 1 eingesetzt. Wenn die Verbindungen gemäß Komponente c) des Anspruchs 1 mehr als eine Gruppe enthalten, die mit den Isocyanaten reagieren kann, reicht es auch aus, wenn auf jede noch nicht umgesetzte Isocyanatgruppe 1 Molekül gemäß Komponente c) des Anspruchs 1 entfällt, jedoch sollte kein Unterschuss eingesetzt werden, um eine unerwünschte Vernetzung zu vermeiden. Ein geringfügiger Überschuss zur Vermeidung von einer unerwünschten Vernetzung kann zweckmässig sein. Im allgemeinen reicht ein Überschuss von etwa 10, vorzugsweise 5 Mol.-% aus. Als Verbindungen gemäß Komponente c) des Anspruchs 1 werden N,N-Diethyl-1,4-butandiamin, 1-(2-Aminoethyl)piperazin, 2-(1-Pyrrolidyl)ethylamin, 4-Amino-2-methoxy-pyrimidin, 2-Dimethylaminoethanol, 1-(2-Hydroxyethyl)piperazin, 4-(2-Hydroxyethyl)morpholin, 2-Mercaptopyrimidin, 2-Mercaptobenzimidazol eingesetzt. Besonders bevorzugt sind N,N-Dimethyl-1,3-propandiamin, 4-(2-Aminoethyl)pyridin, 2-Amino-6-methoxybenzothiazol, 4-Aminomethyl-pyridin, N,N-Diallylmelamin, 3-Amino-1,2,4-triazol, 1-(3-Aminopropyl)imidazol, 4-(2-Hydroxyethyl)pyridin, 1-(2-Hydroxyethyl)imidazol, 3-Mercapto-1,2,4-triazol. Charakteristisch für diese Verbindungen ist, dass sie pro Molekül mindestens 1 Zerewitinoff-Wasserstoffatom enthalten, das bevorzugt mit den Isocyanatgruppen reagiert, und dass sie darüber hinaus eine stickstoffhaltige basische Gruppe besitzen, die nicht zur Harnstoffbildung mit Isocyanatgruppen befähigt ist. Diese basischen Gruppen werden gemäss dem Stand der Technik auch durch ihren pKa-Wert gekennzeichnet (vergl. US-A-3 817 944; 4 032 698 und 4 070 388). Eingesetzt werden Verbindungen mit basischen Gruppen mit einem pKa-Wert von 5 bis 14, und besonders bevorzugt von 5 bis 12. Der pKa-Wert kann Tabellenwerken entnommen werden. Die vorstehend angegebenen Grenzwerte beziehen sich auf die Messung des pKa-Werts bei 25°C in einer 0.01-molaren Konzentration in Wasser. Diese basischen Gruppen verleihen den Additionsverbindungen gemäss der Erfindung ebenfalls eine Basizität, wie auch auf diesem technischen Gebiet bekannt ist (vergl. die oben genannten US-Patentschriften). Durch diese basischen Gruppen sind die Additionsverbindungen zur Salzbildung befähigt. Sie können im Sinne der Erfindung als Dispergiermittel auch in Form von derartigen Salzen eingesetzt werden.

Diese Salze werden aus dem erhaltenen Reaktionsprodukt durch Neutralisation mit organischen oder anorganischen Säuren oder durch Quaternisierung erhalten. Bevorzugt sind Salze mit organischen Monocarbonsäuren.

Alle Reaktionen können, wie gemäss dem Stand der Technik, in Gegenwart von geeigneten, die Reaktion nicht störenden, Lösungsmitteln durchgeführt werden, z.B. Kohlenwasserstoffen wie Xylolen, Ethern einschliesslich Dioxan und Dimethylformamid usw. Weiterhin können die Umsetzungen in Gegenwart von üblichen Katalysatoren durchgeführt werden wie Dibutylzinndilaurat, Eisenacetylacetonat, Triethylendiamin. Es wird insofern auf die eingangs zitierten Patentschriften verwiesen.

Durch Variation der Substituenten der Formel I und II und/oder deren Mengenverhältnissen kann die Verträglichkeit der erfindungsgemässen Additionsverbindungen auf die unterschiedlichsten polymeren Verbindungen abgestimmt werden, welche in Überzugs- und Formmassen vorliegen, in denen die Additionsverbindungen gemäss der Erfindung zur Anwendung kommen. Wenn z.B. in einem Lack das Bindemittel ein Polyester ist, ist es zweckmässig, solche Additionsverbindungen gemäss der Erfindung hierfür einzusetzen, die in ihrem Molekül aufgrund der in den Ausgangsverbindungen der Formel I und II enthaltenen Gruppen auch Polyestergruppen oder ähnliche Gruppen enthalten, die - wie am Fachmann bekannt ist - mit Polyestern verträglich sind. Das gleiche gilt sinngemäss für z.B. Polyethylene oder Polyamide. Hiermit sind besonders verträglich solche Additionsverbindungen gemäss der Erfindung, die wenig polare Gruppen enthalten. Sinngemäss gilt dies für die Substituenten der Verbindungen der Komponente c) des Anspruchs 1, die von besonderem Einfluss sind auf die Affinität der Additionsverbindungen gemäss der Erfindung zu den verwendeten Pigmenten, die dispergiert werden sollen.

In den nachfolgenden Herstellungsbeispielen A bis G wird die Herstellung von Verbindungen der Formel I erläutert.

Teile sind Gewichtsteile, sofern nichts anderes gesagt ist. Bei molekular uneinheitlichen Verbindungen, wie Polymeren, sind die angegebenen Molekulargewichte Durchschnittswerte nach Zahlenmittel ($\overline{M}_n$). Die Molekulargewichte bzw. mittleren Molekulargewichte $\overline{M}_n$ können nach üblichen Verfahren bestimmt werden, z.B. durch Ermittlung der OH-Zahl, der Amin-Zahl oder kryoskopisch.

Der NCO-Gehalt der zum Einsatz kommenden Polyisocyanate sowie der Reaktionsverlauf der Addition wird durch Methoden ermittelt, wie sie beschrieben sind bei Paul Patai « The Chemistry of Cyanates and their Thioderivates», Part 1, Chapter 5, 1977.

*Herstellungsbeispiel A*

Unter Schutzatmosphäre werden 2.1 Teile eines handelsüblichen Heptadecafluorodecanols mit einem mittleren Molekulargewicht von 445 mit 5.9 Teilen 2-Ethylhexanol, 92 Teilen Valerolacton bei 60°C homogenisiert. Man setzt 0.004 Teile Dibutylzinndilaurat zu und erhitzt innerhalb einer Stunde auf 180°C. Man rührt bei dieser Temperatur, bis ein Festkörpergehalt von 98% erreicht ist.

Das farblose bis leicht gelbliche Produkt ist bei Raumtemperatur fest und schmilzt bei 60 bis 70°C,

*Herstellungsbeispiel B*

Im Reaktor werden 11.1 Teile Phenylethylalkohol und 88.9 Teile Caprolacton bei Raumtemperatur homogenisiert und unter Stickstoff mit 0.002 Teilen Dibutylzinndilaurat als Katalysator versetzt. Innerhalb einer Stunde wird auf 160°C erwärmt und bei dieser Temperatur gerührt. Die Reaktion ist beendet, sobald ein Festkörpergehalt von 99% erreicht ist.

Der Polyester kann in 100%iger Form mit einem Schmelzbereich von 50 bis 60°C gehandhabt werden oder z.B. als 50%ige Mischung in Xylol. Die letztere Modifikation ist bei Raumtemperatur fest, mit einem Schmelzbereich von 40 bis 50°C.

*Herstellungsbeispiel C*

Unter Schutzatmosphäre homogenisiert man 7.2 Teile n-Octanol, 92.8 Teile Caprolacton und 0.003 Teile Dibutylzinndilaurat und erhitzt innerhalb einer Stunde auf 160°C. Die Additionsreaktion ist beendet, sobald ein Festkörpergehalt von über 99% erreicht ist. Bei dieser Temperatur ist dieser Festkörper nach 10 bis 12 Stunden erreicht. Das Produkt ist bei Raumtemperatur ein farbloser Feststoff, der bei 50 bis 60°C schmilzt.

*Herstellungsbeispiel D*

Unter Schutzatmosphäre werden 2.9 Teile Isononanol, 97.1 Teile Caprolacton und 0.002 Teile Dibutylzinndilaurat homogenisiert und innerhalb einer Stunde auf 170°C erhitzt. Die Additionsreaktion ist beendet, sobald der Festkörpergehalt über 99,5% ansteigt, was nach 8 bis 10 Stunden erreicht ist. Das Produkt ist bei Raumtemperatur ein farbloser Feststoff, der bei 60 bis 70°C schmilzt.

*Herstellungsbeispiel E*

Unter Sauerstoffausschluss werden in 100 Teilen Xylol 10.5 Teile n-Octanol, 89.5 Teile 12-Hydroxystearinsäure und 0.04 Teile Tetrabutyltitanat homogenisiert (12-Hydroxystearinsäure: OH-Zahl 160 mg KOH/g, Säurezahl 182 mg KOH/g). Man erhitzt unter Normaldruck und destilliert das entstehende Reaktionswasser innerhalb von 7 bis 10 Stunden azeotrop ab. Das Produkt kann in der anfallenden Form weiter umgesetzt werden. Zur Darstellung des 100%igen Produktes wird das Lösungsmittel im Vakuum schonend abgezogen.

*Herstellungsbeispiel F*

38 Teile Adipinsäure, 52.7 Teile Dodecandiol, 9.3 Teile Octanol, 0.01 Teile p-Toluolsulfonsäure und 30 Teile Toluol werden homogenisiert und erhitzt. Das entstehende Reaktionswasser wird durch azeotrope Destillation innerhalb von 5 bis 6 Stunden aus dem Gleichgewicht entfernt, wobei die Temperatur 140 bis 150°C erreicht. Anschliessend wird das Lösungsmittel unter Vakuum schonend abgezogen. Bei Raumtemperatur ist der Polyester fest und schmilzt bei 70 bis 80°C.

*Herstellungsbeispiel G*

Unter Schutzatmosphäre werden 23.4 Teile eines alkalifreien und getrockneten Nonylphenolethoxylats mit einem mittleren Molekulargewicht von 445 mit 76.6 Teilen Caprolacton und 0.004 Teilen Dibutylzinndilaurat homogenisiert. Man erwärmt auf 150°C und rührt 20 Stunden bei dieser Temperatur. Das farblose, wachsartige Produkt hat einen Festkörpergehalt von 98%.

*Herstellungsbeispiele für Verbindungen der Formel II*

*Herstellungsbeispiel I*

9.6 Teile Trimethylolpropan und 90.4 Teile Caprolacton werden bei 170°C nach Zusatz von 0.003 Teilen Dibutylzinndilaurat als Katalysator 6 bis 8 Stunden umgesetzt, bis ein Polyester mit einem mittleren Molekulargewicht von 1400 erhalten wird.

*Herstellungsbeispiel II*

Unter Schutzatmosphäre werden 9 Teile 1,4-Butandiol, 91 Teile Caprolacton und 0.002 Teile Dibutylzinndilaurat homogenisiert und innerhalb einer Stunde auf 160°C erwärmt. Bei dieser Temperatur ist die Additionsreaktion beendet, sobald der Festkörpergehalt 99% übersteigt. Das resultierende Polyesterdiol hat ein mittleres Molekulargewicht von 1000.

*Beispiel 1*

Unter Schutzatmosphäre werden 7.2 Teile Desmodur N (75%ig in Ethylglykolacetat/Xylol 1 : 1) mit 10 Teilen Ethylglykolacetat und 16.9 Teilen eines Caprolactonpolyesters mit mittlerem Molekulargewicht von 1800 (Herstellungsbeispiel C), gelöst in 20 Teilen Xylol, homogenisiert, mit 0.004 Teilen Dibutylzinndilaurat versetzt und bei 60°C bis zur vollständigen Umsetzung der OH-Gruppen gerührt.

Zur Verknüpfungsreaktion verdünnt man mit 10 Teilen Xylol und gibt 0.8 Teile 1,12-Diaminododecan, gelöst in 10 Teilen N-Methylpyrrolidon, zügig zu.

Nach Abreaktion von 66% der ursprünglich eingesetzten NCO-Gruppen verdünnt man mit 13.2 Teilen Xylol und addiert 1.9 Teile N,N-Diallylmelamin, gelöst in 10 Teilen N-Methylpyrrolidon. Man erwärmt auf 70°C und rührt bei dieser Temperatur eine Stunde.

Das Endprodukt ist mittelviskos und farblos klar bis leicht trübe.

*Beispiel 2*

Unter Schutzatmosphäre werden 10.4 Teile Desmodur N (75%ig in Ethylenglykolacetat/Xylol 1 : 1) mit 10 Teilen Ethylglykolacetat verdünnt und mit 15 Teilen eines Caprolactonpolyesters mit einem mittleren Molekulargewicht von 1100 (Herstellungsbeispiel B), gelöst in 20 Teilen Xylol, versetzt. Nach Zugabe von 0.004 Teilen Dibutylzinndilaurat wird auf 60°C erwärmt.

Nachdem 33% der eingesetzten NCO-Gruppen abreagiert sind, gibt man 0.6 Teile Trimethylolpropan, gelöst in 30 Teilen Xylol, zu.

Sobald 66% der NCO-Gruppen umgesetzt sind, gibt man 1.6 Teile 4-(2-Hydroxyethyl)pyridin, gelöst in 12.4 Teilen Ethylglykolacetat zu, erwärmt auf 70°C und rührt bei dieser Temperatur eine Stunde.

Das Endprodukt ist farblos und mittelviskos.

*Beispiel 3*

Unter Schutzatmosphäre werden 10.3 Teile Desmodur N (75%ig in Ethylglykolacetat/Xylol 1 : 1) mit 20 Teilen Ethylglykolacetat und 10.2 Teilen eines handelsüblichen Methoxypolyethylenglykols mit mittlerem Molekulargewicht von 750, gelöst in 15 Teilen Xylol, homogenisiert, mit 0.004 Teilen Dibutylzinndilaurat versetzt und auf 50°C erwärmt.

Nach Abreaktion eines Drittels der NCO-Gruppen werden 5.4 Teile Polyethylenglykol 800, gelöst in 15 Teilen Xylol, zugesetzt.

Nachdem 66% der eingesetzten NCO-Gruppen umgesetzt sind, wird mit 12.4 Teilen Xylol verdünnt und 1.7 Teile 1-(2-Aminoethyl)piperazin, gelöst in 10 Teilen Ethylglykolacetat, zugesetzt. Man rührt bei 70°C zwei Stunden.

Das Produkt ist gelblich und leicht viskos.

*Beispiel 4*

Unter Schutzatmosphäre werden 9.1 Teile Desmodur N (75%ig in Ethylenglykolacetat/Xylol 1 : 1), 17.7 Teile Ethylglykolacetat, 0.003 Teile Dibutylzinndilaurat und 13 Teile eines Caprolactonpolyesters mit einem mittleren Molekulargewicht von 1100 (Herstellungsbeispiel B), gelöst in 10 Teilen Xylol, homogenisiert und auf 50°C erwärmt.

Nach Anlagerung des Polyesters werden 3.7 Teile eines ethoxilierten Oleylamins mit einem mittleren Molekulargewicht von 630, gelöst in 30 Teilen Xylol, addiert.

Sobald 65% der NCO-Gruppen abreagiert sind, setzt man 1.5 Teile 4-(2-Aminoethyl)pyridin, gelöst in 15 Teilen N-Methylpyrrolidon, zu und rührt zur Vervollständigung der Reaktion eine Stunde.

*Beispiel 5*

Unter Schutzatmosphäre werden 7.6 Teile Desmodur N (75%ig in Ethylenglykolacetat/Xylol 1 : 1), 18.1 Teile Xylol und 13.8 Teile eines Adipinsäure-Dodecandiol-, Octanol-Polyesters mit einem mittleren Molekulargewicht von 1400 (Herstellungsbeispiel F), gelöst in 10 Teilen Xylol, homogenisiert, mit 0.003 Teilen Dibutylzinndilaurat versetzt und auf 40°C erwärmt.

Nachdem 30% der NCO-Gruppen abreagiert sind, werden 4.5 Teile des in Herstellungsbeispiel I beschriebenen Trimethylolpropan-Caprolactonpolyesters, gelöst in 30 Teilen Xylol, zugegeben.

Nach Addition der Hydroxylgruppen gibt man 1 Teil N,N-Dimethyl-1,3-propandiamin, gelöst in 15 Teilen N-Methylpyrrolidon, zu, erwärmt auf 60°C und rührt eine Stunde.

Das Produkt ist hoch-viskos und farblos.

*Beispiel 6*

Unter Schutzatmosphäre werden 12.9 Teile Desmodur L (67%ig in Ethylenglykolacetat/Xylol 1 : 1) mit 20 Teilen Ethylglykolacetat/Xylol (1 : 1) verdünnt. 9 Teile eines handelsüblichen Methoxypolyethylenglykols mit mittlerem Molekulargewicht von 750, gelöst in 10 Teilen Xylol, sowie 0.003 Teile Dibutylzinndilaurat werden zugesetzt.

Nachdem bei 50°C 33% der NCO-Gruppen abreagiert sind, werden 6 Teile des in Herstellungsbeispiel II beschriebenen Caprolactonpolyesters mit mittlerem Molekulargewicht von 1000, gelöst in 20 Teilen Xylol, addiert. Die Reaktion ist beendet, sobald 66% der NCO-Gruppen reagiert haben.

Zur Addition an die verbleibenden NCO-Gruppen werden 1.4 Teile 1-(2-Hydroxyethyl)imidazol, gelöst in 20.7 Teilen Xylol zugesetzt, und es wird bei 70°C zwei Stunden gerührt.

Das farblose klare Produkt ist leicht viskos.

*Beispiel 7*

Unter Schutzatmosphäre löst man bei 50°C 14.3 Teile eines Adipinsäure-Dodecandiol-Octanol-Polyesters mit mittlerem Molekulargewicht von 1400 (Herstellungsbeispiel F) in einer Mischung aus 15 Teilen Ethylglykolacetat und 10 Teilen Xylol. Man kühlt auf 20°C und gibt unter Rühren 11.1 Teile Desmodur L (67%ig in Ethylglykolacetat/Xylol 1 : 1) und 0.003 Teile Dibutylzinndilaurat zu. Man erwärmt langsam auf 50°C und kontrolliert den Reaktionsfortgang durch NCO-Bestimmung.

Nach Abreaktion eines Drittels der eingesetzten NCO-Gruppen gibt man 2,1 Teile Polyethylenglykol mit mittlerem Molekulargewicht von 400, gelöst in 20 Teilen Xylol, zu und lässt das zweite Drittel der NCO-Gruppen abreagieren. Anschliessend verdünnt man mit 11,4 Teilen Xylol und setzt 1.1 Teile N,N-Dimethyl-1,3-Diaminopropan, gelöst in 15 Teilen N-Methylpyrrolidon, zu. Die Reaktionsmischung wird eine Stunde bei 50°C gerührt.

*Beispiel 8*

Unter Schutzatmosphäre werden 12.4 Teile Ethylglykolacetat, 11 Teile Desmodir L (67%ig in Ethylglykolacetat/ Xylol 1 : 1) und 14.2 Teile eines Adipinsäure-Dodecandiol-Octanol-Polyesters mit einem mittleren Molekulargewicht von 1400 (Herstellungsbeispiel F), gelöst in 20 Teilen Xylol, homogenisiert und mit 0.003 Teilen Dibutylzinndilaurat versetzt. Man erwärmt auf 50°C und addiert den Polyester an das Desmodur L.

Nach diesem Reaktionsschritt gibt man 2.2 Teile eines handelsüblichen Cocossäurediethanolamids, gelöst in 30 Teilen Ethylglykolacetat/Xylol (1 : 1) zu. Das Cocossäurediethanolamid hat ein mittleres Molekulargewicht von 440.

Sobald zwei Drittel der eingesetzten NCO-Gruppen abreagiert sind, setzt man zügig 1.3 Teile 1-(3-Aminopropyl) imidazol, gelöst in 10 Teilen NMP, zu, erwärmt auf 70°C und rührt eine Stunde bei dieser Temperatur.

Das mittel-viskose Produkt ist klar bis leicht trübe.

*Beispiel 9*

Unter Schutzatmosphäre und Feuchtigkeitsausschluss werden 7.9 Teile Poly-Isophorondiisocyanat (70%ig in Ethylglykolacetat/Xylol 1 : 1) in 10 Teilen Ethylglykolacetat gelöst und mit 15 Teilen eines Valerolactonpolyesters mit einem mittleren Molekulargewicht von 2000 (Herstellungsbeispiel A), gelöst in 20 Teilen Xylol, homogenisiert. Man gibt 0.003 Teile Dibutylzinndilaurat zu und erwärmt auf 50°C.

Nach Abreaktion der OH-Gruppen setzt man 3.7 Teile Polypropylenglykol mit einem mittleren Molekulargewicht von 1000, gelöst in 20 Teilen Xylol, zu.

Nachdem 66% der eingesetzten NCO-Gruppen abreagiert sind, setzt man 7.6 Teile Xylol und 0.8 Teile 3-Mercapto-1,2,4-triazol, gelöst in 15 Teilen N-Methylpyrrolidon zu und rührt eine Stunde bei 60°C.

Die Produktlösung ist niedrig-viskos und leicht bräunlich gefärbt.

*Beispiel 10*

Unter Feuchtigkeitsausschluss werden in 20 Teilen Ethylglykolacetat 14.1 Teile Desmodur HL (60%ig in Butylacetat) gelöst, mit 11.6 Teilen eines 1100 Caprolactonpolyesters (Herstellungsbeispiel B), gelöst in 20 Teilen Xylol und 0.003 Teilen Dibutylzinndilaurat, versetzt und langsam auf 60°C erwärmt.

Sobald 30% der eingesetzten NCO-Gruppen abreagiert sind, ist die erste Stufe beendet.

Zur Kopplung setzt man 3.4 Teile handelsübliches Polytetrahydrofurandiol, mit einem mittleren Molekulargewicht von 650, gelöst in 14,4 Teilen Xylol, zu.

In der letzten Stufe, die sich nach Abreaktion von 60% der eingesetzten NCO-Gruppen anschliesst, addiert man 1.5 Teile 3-Mercapto-1,2,4-triazol, gelöst in 15 Teilen N-Methylpyrrolidon, erwärmt auf 70°C und rührt bei dieser Temperatur eine Stunde.

*Beispiel 11*

Die Reaktion erfolgt bei 50°C unter Schutzatmosphäre. 14.4 Teile Desmodur HL (60%ig in Butylacetat) werden in 15 Teilen Ethylglykolacetat gelöst und mit 9.9 Teilen eines Phenylethylalkohol-gestarteten Caprolactonpolyesters mit einem mittleren Molekulargewicht von 1100 (Herstellungsbeispiel B) versetzt. Der Polyester ist in 13 Gewichtsteilen Xylol angelöst.

Nach vollständiger Polyesteraddition, was durch Abnahme der NCO-Gruppen ersichtlich ist, setzt man 4.5 Teile Polyethylenglykol mit einem mittleren Molekulargewicht von 1000 zu. Abreaktion der verbliebenen NCO-Gruppen setzt man 2.3 Teile 1-(2-Aminoethyl)piperazin zu und verdünnt mit Xylol auf 30% Festkörper.

Das Produkt ist eine leicht trübe, viskose Lösung.

*Beispiel 12*

Unter Schutzgas werden 10.1 Teile Desmodur HL (60%ig in Butylacetat) mit 30 Teilen einer Mischung aus Xylol/ Ethylglykolacetat (1 : 1) verdünnt und mit 12.7 Teilen eines Polyesters mit mittlerem Molekulargewicht von 2000 (Herstellungsbeispiel A) versetzt. Nach Zugabe von 0.003 Teilen Dibutylzinndilaurat wird die Additionsreaktion bei Raumtemperatur durchgeführt.

Nachdem 25% der NCO-Gruppen abreagiert sind, werden in der zweiten Stufe 4.7 Teile eines Polyethylenglykols mit einem mittleren Molekulargewicht von 1500 addiert.

Nachdem die Hälfte der NCO-Gruppen abreagiert sind, verdünnt man mit Xylol auf einen Endproduktfestkörper von 25%, setzt 1.5 Teile 4-(2-Aminoethyl)pyridin zu, erwärmt auf 60°C und rührt bei dieser Temperatur eine Stunde.

Das Produkt ist leicht gelb gefärbt und viskos.

*Beispiel 13*

Die Reaktion wird bei 50°C unter Schutzgasatmosphäre durchgeführt. 6.3 Teile Desmodur HL (60%ig in Butylacetat) werden mit einer Mischung aus 15 Teilen Ethylglykolacetat und 36 Teilen Xylol verdünnt. 0.7 Teile eines Polyethylenglykols mit einem mittleren Molekulargewicht von 400 und 19.6 Teile eines Caprolactonpolyesters mit einem mittleren Molekulargewicht von 5000 (Herstellungsbeispiel D) werden in geschmolzenem Zustand zugegeben. Zur Beschleunigung der Reaktion werden 0.002 Teile Dibutylzinndilaurat addiert.

Nach Abreaktion aller OH-Gruppen setzt man 0.9 Teile 4-(2-Hydroxyethyl)pyridin zu und stellt mittels Xylol einen Festkörper von 25% ein. Zur Vervollständigung der Reaktion wird eine Stunde bei 60°C gerührt.

Das Produkt ist niedrig-viskos und farblos.

*Beispiel 14*

Unter Schutzatmosphäre werden 10.7 Teile Desmodur HL (60%ig in Butylacetat) mit 16.2 Teilen eines Heptadecafluorodecanol(2-Ethylhexanol-gestarteten Valerolactonpolyesters mit einem mittleren Molekulargewicht von 2000 (Herstellungsbeispiel A), gelöst in 15.7 Teilen Xylol, homogenisiert. Man setzt 0.001 Teile Dibutylzinndilaurat zu und addiert den Polyester bei 50°C.

Nach Beendigung dieser Reaktion verdünnt man mit 20 Teilen Ethylglykolacetat und gibt 0.3 Teile 1,4-Butandiamin, gelöst in 20 Teilen Xylol, zu.

Sobald 55% der eingesetzten NCO-Gruppen abreagiert sind, wird die leicht exotherme Reaktion abgebrochen, indem man 2.1 Teile 2-Amino-6-methoxybenzothiazol, gelöst in 15 Teilen NMP, zugibt. Man erwärmt auf 70°C und rührt eine Stunde.

Das Produkt ist leicht viskos und gelblich klar gelöst.

*Beispiel 15*

Unter Schutzatmosphäre werden zu 20 Teilen Ethylglykolacetat/Xylol (1 : 1) 16.1 Teile Desmodur IL (51 %ig in Butylacetat) und 11 Teile eines Caprolactonpolyesters 1800 (Herstellungsbeispiel C), gelöst in 20 Teilen Xylol, zugesetzt und nach Katalysierung durch 0.002 Teile Dibutylzinndilaurat wird bei Raumtemperatur addiert.

Nachdem 20% der NCO-Gruppen verbraucht sind, werden 3.8 Teile des in Herstellungsbeispiel II beschriebenen Polycaprolactonpolyesters, gelöst in 17.1. Teilen Xylol, zugegeben.

Nach Abnahme der eingesetzten NCO-Gruppen auf 55% werden 10 Teile Xylol und 2.0 Teile 4-(2-Aminoethyl) pyridin, gelöst in 10 Teilen Diisobutylketon, zugegeben. Man erwärmt auf 50°C und rührt eine Stunde.

Das farblose bis leicht gelbliche Produkt ist niedrig viskos.

*Beispiel 16*

Unter Schutzatmosphäre und Feuchtigkeitsausschluss werden 9 Teile Desmodur IL (51 %ig in Butylacetat) mit 17 Teilen eines Polyesters mit mittlerem Molekulargewicht von 5000 (Herstellungsbeispiel D), gelöst in 25 Teilen Xylol, homogenisiert und mit 0.003 Teilen Dibutylzinndilaurat versetzt. Die Reaktion wird bei 60°C durchgeführt.

Nach der Polyesteraddition setzt man 2.5 Teile Polypropylenglykol mit einem mittleren Molekulargewicht von 1000, gelöst in 30 Teilen Xylol, zu. Zur Beschleunigung der Reaktion werden 0.002 Teile Dibutylzinndilaurat zudosiert.

Nach Abrekation der Hydroxygruppen wird mit 5.6 Teilen Xylol verdünnt und an die verbleibenden NCO-Gruppen werden 0.9 Teile 3-Mercapto-1,2,4-triazol, gelöst in 10 Teilen N-Methylpyrrolidon, addiert.

Das Produkt ist mittel-viskos und gelblich gefärbt.

*Beispiel 17*

Unter Schutzatmosphäre werden 15.5 Teile Desmodur IL (51 %ig in Butylacetat) mit 13.3 Teilen eines Polyesters mit mittlerem Molekulargewicht von 1800 (Herstellungsbeispiel C), gelöst in 15 Teilen Xylol, homogenisiert, mit 0.003 Teilen Dibutylzinndilaurat versetzt und auf 50°C erwärmt.

Nach Addition des Polyesters, was durch Verringerung der NCO-Gruppen um 25% ersichtlich ist, verdünnt man mit 20 Teilen Xylol und setzt 0.7 Teile 1,12 -Diaminododecan zu.

Nach der exothermen Addition werden 14 Teile Xylol und 1.5 Teile N,N-Dimethyl-1,3-propandiamin, in 20 Teilen N-Methylpyrrolidon gelöst, zugegeben. Man rührt noch eine Stunde bei 70°C.

Das Produkt ist mittel-viskos und leicht trübe.

*Beispiel 18*

Unter Schutzatmosphäre werden 15.5 Teile Desmodur IL (51 %ig in Butylacetat) mit 30 Teilen Xylol/ Butylacetat (4 : 1) und 26.6 Teilen eines Polyesters mit einem mittleren Molekulargewicht von 1800 (Herstellungsbeispiel C) homogenisiert. Man setzt 0.003 Teile Dibutylzinndilaurat zu, erwärmt auf 50°C, wobei die Hälfte der NCO-Gruppen abreagiert.

0.3 Teile 1,4-Butandiol, gelöst in 30 Teilen Xylol, werden zugesetzt. Nachdem so 75% der NCO-Gruppen abreagiert sind, gibt man 0.6 Teile 3-Amino-1,2,4-triazol, gelöst in 10 Teilen N-Methylpyrrolidon, zu. Mit Xylol stellt man einen Festkörper von 30% ein.

Das mittel-viskose, gelbliche Produkt wird bei 60°C eine Stunde gerührt.

*Verwendungsbeispiel*

*Mahlgut*

In einem temperierten (50°C) Edelstahlrührgefäss werden 25 Gewichtsteile eines 50%igen Hydroxy-Acrylatharzes mit 3 Gewichtsteilen Xylol und 1 Gewichtsteil Butylacetat gemischt. Dann gibt man X Gewichtsteile der erfindungsgemässen Additionsverbindung bzw. der Vergleichsverbindung (Beispiel 8 der US-A-4 032 698) zu, homogenisiert und versetzt mit Y Gewichtsteilen eines Pigments (Tabelle 1). Die Gewichtsteile der erfindungsgemässen Additionsverbindung bzw. Vergleichsverbindung sind berechnet als 100% Festkörper.

Man homogenisiert, setzt 200 Gewichtsprozent Stahlperlen, bezogen auf den Mahlansatz, zu und dispergiert 40 Minuten bei 50°C, indem mit einer der Gefässgrösse angepassten Polypropylenscheibe mit etwa 12 $ms{\cdot}s^{-1}$ gerührt wird.

*Stammlack*

Zum Mahlgut gibt man das Auflackgut, welches aus 52 Gewichtsteilen Hydroxy-Acrylatharz (50%-ig), 6 Gewichtsteilen Xylol, 2 Gewichtsteilen Butylacetat und 0.1 Gewichtsteilen eines Verlaufadditives hergestellt wurde. Zur Homogenisierung rührt man 2 Minuten mit ca. 2 $m\ s^{-1}$. Die Stahlkugeln filtriert man ab. Diesen Stammlack lässt man 12 bis 15 Stunden vor der weiteren Verarbeitung ruhen.

Ein Teil des so hergestellten Stammlacks wird dann wie nachfolgend beschrieben weiterverarbeitet, und ein anderer Teil des so hergestellten Stammlacks wird nach 14 tägiger Lagerung bei 50°C in der gleichen nachfolgend beschriebenen Weise weiterverarbeitet. Die Ergebnisse, die mit dem sofort weiterverarbeiteten Lack erhalten werden, sind in Tabelle 2 zusammengestellt, während die Ergebnisse, die mit dem nach 14tägiger Lagerung verarbeiteten Lack erhalten werden, in Tabelle 3 zusammengestellt sind.

Zur Härtung werden zu 100 Gewichtsteilen Stammlack 30 Gewichtsteile eines 75%igen triisocyanathaltigen Härters (Desmodur N) zugegeben und untergerührt.

Anschliessend stellt man mittels einer Verdünnung, die aus Xylol/Alkylbenzol (> $C_9$) Butylacetat (2 : 1 : 1) besteht, die Viskosität des fertigen Lacks auf 16" DIN 4/23 ein.

Nach einer Stunde wird der eingestellte Lack auf eine gereinigte, 80° geneigte Glasplatte aufgegossen.

Nach Durchhärtung wird der Lackfilm (Buntlack) auf Glanz und Transparenz sowie unter einem Lichtmikroskop auf Teilchengrösse bzw. auf Flockulation bewertet.

Die Bewertung erfolgt nach einer Zahlenskala von 0 bis 10, wobei 0 = keine Flockulation, hoher Glanz, gute Transparenz und 10 = totale Flockulation, kein Glanz, keine Transparenz bedeutet.

Die erhaltenen Ergebnisse sind in den Tabellen 2 und 3 in der Zeile «Buntlack» wiedergegeben.

Eine weitere Methode zur Bestimmung der Pigmentgrössenverteilung und der Pigmentstabilisierung im Lack ist die Abmischung mit einem Weisslack und der nachfolgende Rubout-Test (Weissabmischung): Hierzu man den aufgegossenen Lack ablüften (etwa 10 Minuten) und reibt mit dem Finger die Probe bis zur Farbkonstanz aus.

Dazu werden die Stammlacke der Buntpigmente I bis V laut Tabelle 1 mit dem Weisslack VI laut Tabelle 1 im Verhältnis 1 : 4 gemischt, homogenisiert und auf 16" DIN 4/23 eingestellt. Man giesst auf eine 80° geneigte Glasplatte auf und macht, nach Ablüftung (etwa 10 Minuten), den Rubout-Test.

Nach Aushärtung des Fims wird die Farbstärke sowohl der ausgeriebenen als auch der nichtausgeriebenen Probe gemessen. Dazu wurde wieder eine Skala von 0 bis 10 gewählt, wobei

0 = gleiche Farbstärke, gleicher Farbton, kein Ausschwimmen, also kein feststellbarer Unterschied zwischen ausgeriebener und nicht-ausgeriebener Probe und
10 = völlig veränderte Farbstärke und Ausschwimmen eines Pigments

bedeutet.

Die erhaltenen Ergebnisse sind in den Tabellen 2 und 3 in der Zeile «Weissabmischung» angegeben.

Tabelle 1

| | | eingesetztes Pigment | Y Gew.-Teile | erfindungsgemässe Additionsverbindung bzw. Vergleichsbeispiel * | X Gew.-Teile |
|---|---|---|---|---|---|
| I | a | Polycyclisches Thioindigo-Derivat | 4,5 | Beispiel 13 | 0,67 |
| | b | C.I.1 Pigment red 88 C.I.2 17712 z.B. Novoperm Rotviolett MRS | 4,5 | Vergleichsbeispiel | 0,67 |
| II | a | Polycyclische Chinacridon-Derivat | 4,0 | Beispiel 13 | 0,4 |
| | b | C.I.1 Pigment violett 19 C.I.2 46500 z.B. Quindo violett RV 6902 | 4,0 | Vergleichsbeispiel | 0,4 |
| III | a | Mono-azo-Arylamid-Derivat C.I. 1 Pigment orange 36 | 5 | Beispiel 13 | 0,5 |
| | b | C.I.2 11780 z.B. Novoperm Orange HL 70 | 5 | Vergleichsbeispiel | 0,5 |
| IV | a | Polycyclisches Perylen-Derivat | 5 | Beispiel 13 | 0,5 |
| | b | C.I.1 Pigment red 178 C.I.2 71155 z.B. Paliogen Rot L 3910 HD | 5 | Vergleichsbeispiel | 0,5 |
| V | a | Anthrachinon -Derivat | 5 | Beispiel 13 Vergleichsbeispiel | 0,75 |
| | b | C.I.1 Pigment red 177 C.I.2 65300 z.B. Cromophtal Rot A2B | 5 | | 0,75 |
| VI | a | anorg. Weisspigment | 25 | Beispiel 13 | 0,75 |
| | b | Titandioxid | 25 | Vergleichsbeispiel | 0,75 |

* Vergleichsbeispiel: Beispiel 8 von US-A-4 032 698

Tabelle 2

| Pigmente | I | | II | | III | | IV | | V | |
|---|---|---|---|---|---|---|---|---|---|---|
| | a | b | a | b | a | b | a | b | a | b |
| Buntlack | 0 | 5 | 0 | 6 | 0 | 5 | 1 | 7 | 1 | 9 |
| Weissabmischung | 1 | 7 | 0 | 7 | 0 | 6 | 0 | 9 | 1 | 10 |

a = erfindungsgemässe Additionsverbindung
b = Vergleichsbeispiel

Tabelle 3

| Pigmente | I | | II | | III | | IV | | V | |
|---|---|---|---|---|---|---|---|---|---|---|
| | a | b | a | b | a | b | a | b | a | b |
| Buntlack | 0 | 6 | 0 | 6 | 0 | 6 | 0 | 7 | 0 | 10 |
| Weissabmischung | 0 | 8 | 0 | 7 | 0 | 6 | 0 | 10 | 1 | 10 |

a = erfindungsgemässe Additionsverbindung
b = Vergleichsbeispiel

Die mit den erfindungsgemässen Additionsverbindungen hergestellten Lacke bewirken eine erheblich bessere Stabilisierung der Pigmente.

## Patentansprüche

1. Als Dispergiermittel geeignete Additionsverbindungen und deren Salze, erhältlich durch Umsetzung von Polyisocyanaten, Hydroxyverbindungen, Zerewitinoff-Wasserstoff sowie mindestens eine basische Gruppe enthaltenden Verbindungen mit einem pKa-Wert von 5 bis 14 und gegebenenfalls Verbindungen, die Aminwasserstoff enthalten, gegebenenfalls in Anwesenheit von Lösungsmitteln und gegebenenfalls in Gegenwart von Umsetzungskatalysatoren, dadurch **gekennzeichnet,** daß sie dadurch erhältlich sind, daß Polyisocyanate mit einer mittleren Funktionalität von 3 bis 6

    a) mit Monohydroxyverbindungen der Formel I

    $$Y\text{-}OH \qquad \text{I}$$

    wobei Y die folgenden Bedeutungen hat:

    i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,
    ii) mindestens eine -O- und/oder -COO-Gruppe enthaltende aliphatische, cycloaliphatische und/oder aromatische Gruppen mit Molekulargewichten von 350 bis 8000, wobei die Wasserstoffatome teilweise durch Halogene ersetzt sein können,

    in einer solchen Menge umgesetzt werden, daß im Mittel auf je ein Molekül Polyisocyanat mindestens 0.8 Moleküle der Formel I entfallen, jedoch im Mittel von jedem Molekül Polyisocyanat mindestens 2 Isocyanatgruppen nicht umgesetzt bleiben, mit der Maßgabe, daß 20 bis 50 %, der NCO-Gruppen umgesetzt sind,

    b) das erhaltene Reaktionsprodukt mit Verbindungen der Formel II

    $$G\text{-}(E)_n \qquad \text{II}$$

    wobei E für -OH, $-NH_2$ und/oder -NHR (worin R eine Alkylgruppe mit 1 bis 4 Kohlenstoffatomen darstellt), und n für 2 oder 3 stehen, und G eine mindestens 2 Kohlenstoffatome enthaltende aliphatische, cycloaliphatische und/oder aromatische Gruppe mit Molekulargewichten von höchstens 3000 darstellt, die -O-, -COO-, -CONH-, -S- und/oder $-SO_2$-Gruppen enthalten kann, in einer solchen Menge umgesetzt wird, daß 0.8 n bis 1.1 n Moleküle Polyisocyanat auf 1 Molekül der Formel II entfallen, jedoch im Mittel von jedem Molekül Polyisocyanat mindestens eine Isocyanatgruppe nicht umgesetzt bleibt, jedoch die Summe der NCO-Umsetzungsgrade der Umsetzungen a) und b) maximal 75 % beträgt, mit der Maßgabe, daß weitere 22 % - 36% der NCO-Gruppen der urprünglich eingesetzte Polyisocyanate umgesetzt sind, und die Summe der Umsetzungsgrade der Umsetzungen a) und b) mindestens 45% beträgt.

    c) das erhaltende Reaktionsprodukt mit Verbindung aus der Gruppe N,N-Diethyl-1,4-butendiamin, 1-(2-Aminoethyl)piperazin, 2-(1-Pyrrolidyl)-ethylamin, 4-Amino-2-methoxy-pyrimidin, 2-Dimethylaminoethanol, 1-(2-Hydroxyethyl)piperazin, 4-(2-Hydroxyethyl)morpholin, 2-Mercaptopyrimidin, 2-Mercaptobenzimidazol, N, N-Dimethyl-1,3-propandiamin, 4-(2-Aminoethyl)pyridin, 2-Amino-6-methoxybenzothiazol, 4-Aminomethylpyridin, N,N-Diallylmelamin, 2-Amino-1,2,4-triazol, 1-(3-Aminopropyl)imidazol, 4-(2-Hydroxyethyl)pyridin, 1-(2-Hydroxyethyl)imidazol und 3-Mercapto-1,2,4-triazol in einer solchen Menge umgesetzt wird, daß die verbleibenden Isocyanatgruppen umgesetzt sind.

2. Additionsverbindungen und deren Salze nach Anspruch 1, dadurch gekennzeichnet, daß die Monohydroxyverbindungen der Formel I Polyester mit mittleren Molekulargewichten $M_n$ von 500 bis 5000, vorzugsweise aus aliphatischen Lactonen und aliphatischen Monoalkoholen mit 4 bis 18 Kohlenstoffatomen sind.

**3.** Additionsverbindungen und deren Salze nach Anspruch 1 oder 2, dadurch gekennzeichnet, daß die Verbindungen der Formel II Polyoxyalkylenglykole, vorzugsweise mit mittleren Molekulargewichten $M_n$ von 400 bis 2000 sind.

**4.** Additionsverbindungen und deren Salze nach Anspruch 3, dadurch gekennzeichnet, daß die Verbindungen II mittlere Molekulargewichte $M_n$ von 600 bis 1500 aufweisen.

**5.** Additionsverbindungen und deren Salze nach Anspruch 3 oder 4, dadurch gekennzeichnet, daß das Polyoxyalkylenglykol ein Polyethylenglykol ist.

**6.** Verfahren zur Herstellung von als Dispergiermittel geeigneten Additionsverbindungen und deren Salzen, durch Umsetzung von Polyisocyanaten, Hydroxyverbindungen, Zerewitinoff-Wasserstoff sowie mindestens eine basische Gruppe enthaltenden Verbindungen mit einem pKa-Wert von 5 bis 14 und gegebenenfalls Verbindungen, die Aminwasserstoff enthalten, gegebenenfalls in Anwesenheit von Lösungsmitteln und gegebenenfalls in Gegenwart von Umsetzungskatalysatoren, **dadurch gekennzeichnet,** daß Polyisocyanate mit einer mittleren Funktionalität von 3 bis 6

a) mit Monohydroxyverbindungen der Formel I

$$Y\text{-}OH \qquad \text{I}$$

wobei Y die folgenden Bedeutungen hat:

i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,
ii) mindestens eine -O- und/oder -COO-Gruppe enthaltende aliphatische, cycloaliphatische und/oder aromatische Gruppen mit Molekulargewichten von 350 bis 8000, wobei die Wasserstoffatome teilweise durch Halogene ersetzt sein können,

in einer solchen Menge umgesetzt werden, daß im Mittel auf je ein Molekül Polyisocyanat mindestens 0.8 Moleküle der Formel I entfallen, jedoch im Mittel von jedem Molekül Polyisocyanat mindestens 2 Isocyanatgruppen nicht umgesetzt bleiben, mit der Maßgabe, daß 20 bis 50% der NCO-Gruppe umgesetzt sind,

b) das erhaltene Reaktionsprodukt mit Verbindungen der Formel II

$$G\text{-}(E)_n \qquad \text{II}$$

wobei E für -OH, $-NH_2$ und/oder -NHR (worin R eine Alkylgruppe mit 1 bis 4 Kohlenstoffatomen darstellt), und n für 2 oder 3 stehen, und G eine mindestens 2 Kohlenstoffatome enthaltende aliphatische, cycloaliphatische und/oder aromatische Gruppe mit Molekulargewichten von höchstens 3000 darstellt, die -O-, -COO-, -CONH-, -S- und/oder $-SO_2$-Gruppen enthalten kann, in einer solchen Menge umgesetzt wird, daß 0.8 n bis 1.1 n Moleküle Polyisocyanat auf 1 Molekül der Formel II entfallen, jedoch im Mittel von jedem Molekül der Formel II enfallen, jedoch im Mittel von jedem Molekül Polyisocyanat mindestens eine Isocyanatgruppe nicht umgesetzt bleibt, jedoch die Summe der NCO-Umsetzungsgrade der Umsetzungen a) und b) maximal 75 % beträgt, mit der Maßgabe, daß weitere 22 % - 36% der NCO-Gruppen der urprünglich eingesetzte Polyisocyanate umgesetzt sind, und die Summe der Umsetzungsgrade der Umsetzungen a) und b) mindestens 45% beträgt.

c) das erhaltene Reaktionsprodukt mit Verbindung aus der Gruppe N,N-Diethyl-1,4-butandiamin, 1-(2-Aminoethyl)piperazin, 2-(1-Pyrrolidyl)-ethylamin, 4-Amino-2-methoxy-pyrimidin, 2-Dimethylaminoethanol, 1-(2-Hydroxyethyl)piperazin, 4-(2-Hydroxyethyl)morpholin, 2-Mercaptopyrimidin, 2-Mercaptobenzimidazol, N, N-Dimethyl-1,3-propandiamin, 4-(2-Aminoethyl)pyridin, 2-Amino-6-methoxybenzothiazol, 4-Aminomethylpyridin, N,N-Diallylmelamin, 3-Amino-1,2,4-triazol, 1-(3-Aminopropyl)imidazol, 4-(2-Hydroxyethyl)pridin, 1-(2-Hydroxyethyl)imidazol und 3-Mercapto-1,2,4-triazol oder deren Salzen in einer solchen Menge umgesetzt wird, daß die verbleibenden Isocyanatgruppe umgesetzt sind.

**7.** Verfahren nach Anspruch 6, dadurch gekennzeichnet, daß die Monohydroxyverbindungen der Formel I Polyester

mit mittleren Molekulargewichten $M_n$ von 500 bis 5000, vorzugsweise aus aliphatischen Lactonen und aliphatischen Monoalkoholen mit 4 bis 18 Kohlenstoffatomen sind.

**8.** Verfahren nach Anspruch 6 oder 7, dadurch gekennzeichnet, daß die Verbindungen der Formel II Polyoxyalkylenglykole, vorzugsweise mit mittleren Molekulargewichten $M_n$ von 400 bis 2000 sind.

**9.** Verfahren nach Anspruch 8, dadurch gekennzeichnet, daß die Verbindungen II mittlere Molekulargewichte $M_n$ von 600 bis 1500 aufweisen.

**10.** Verfahren nach Anspruch 8 oder 9, dadurch gekennzeichnet, daß das Polyoxyalkylenglykol ein Polyethylenglykol ist.

**11.** Verwendung der Additionsverbindungen und deren Salze gemäß Ansprüche 1 bis 10 als Dispergiermittel.

**12.** In flüssige Systeme einzuarbeitende pulver- oder faserförmige Feststoffe, die mit Dispergiermittel beschichtet sind, dadurch gekennzeichnet, daß sie mit Additionsverbindungen oder deren Salzen nach Anspruchen 1 bis 5 beschichtet sind.

**13.** Pulverförmige Feststoffe nach Anspruch 12, dadurch gekennzeichnet, daß die Feststoffe Pigmente sind.

**Claims**

**1.** Addition compounds and salts thereof which are suitable as dispersing agents, obtainable by the reaction of polyisocyanates, hydroxy compounds, compounds with a pKa value of 5 to 14 which contain Zerewitinoff hydrogen as well as at least one basic group, and optionally compounds which contain amino hydrogen, optionally in the presence of solvents and optionally in the presence of reaction catalysts, characterised in that they are obtainable by the reaction of polyisocyanates having an average functionality of 3 to 6

a) with monohydroxy compounds of formula I

$$Y\text{-}OH \qquad I$$

wherein Y has the following meanings:

i) aliphatic and/or cycloaliphatic hydrocarbon groups containing 8 to 30 carbon atoms, the hydrogen atoms of which can be replaced in part by halogens and/or aryl radicals,
ii) aliphatic, cycloaliphatic and/or aromatic groups which contain at least one -O- and/or -COO- group and which have molecular weights of 350 to 8000, wherein the hydrogen atoms can be replaced in part by halogens,

in an amount such that on average at least 0.8 molecules of formula I are allotted to each molecule of polyisocyanate, but such that on average at least 2 isocyanate groups of each molecule of polyisocyanate remain unreacted, with the proviso that 20 to 50 % of the NCO groups are reacted,

b) the reaction product obtained is reacted with compounds of formula II

$$G\text{-}(E)_n \qquad II$$

wherein E represents -OH, $-NH_2$ and/or -NHR (wherein R represents an alkyl group containing 1 to 4 carbon atoms), n represents 2 or 3, and G represents an aliphatic, cycloaliphatic and/or aromatic group with a molecular weight of 3000 at most, which contains at least 2 carbon atoms, and which can contain -O-, -COO-, -CONH-, -S- and/or $SO_2$ groups, in an amount such that 0.8n to 1.1n molecules of polyisocyanate are allotted to 1 molecule of formula II, but such that on average at least one isocyanate group of each molecule of polyisocyanate remains unreacted, but that the sum of the degrees of NCO reaction of reactions a) and b) is 75 %

as a maximum, with the proviso that a further 22 % - 36 % of the NCO groups of the polyisocyanates originally used are reacted, and the sum of the degrees of reaction of reactions a) and b) is at least 45 %,

c) the reaction product obtained is reacted with a compound from the group comprising N,N-diethyl-1,4-butanediamine, 1-(2-aminoethyl)piperazine, 2-(1-pyrrolidyl)-ethylamine, 4-amino-2-methoxy-pyrirnidine, 2-dimethylaminoethanol, 1-(2-hydroxyethyl)piperazine, 4-(2-hydroxyethyl)morpholine, 2-mercaptopyrimidine, 2-mercaptobenzimidazole, N,N-dimethyl-1,3-propanediamine, 4-(2-aminoethyl)pyridine, 2-amino-6-methoxybenzothiazole, 4-aminomethyl-pyridine, N,N-diallylmelamine, 3-amino-1,2,4-triazole, 1-(3-aminopropyl)imidazole, 4-(2-hydroxyethyl)pyridine, 1-(2-hydroxyethyl)imidazole and 3-mercapto-1,2,4-triazole, in an amount such that the remaining isocyanate groups are reacted.

**2.** Addition compounds and salts thereof according to claim 1, characterised in that the monohydroxy compounds of formula I are polyesters with average molecular weights $M_n$ of 500 to 5000, which are preferably formed from aliphatic lactones and aliphatic monoalcohols containing 4 to 18 carbon atoms.

**3.** Addition compounds and salts thereof according to claims 1 or 2, characterised in that the compounds of formula II are polyoxyalkylene glycols, preferably with average molecular weights $M_n$ of 400 to 2000.

**4.** Addition compounds and salts thereof according to claim 3, characterised in that compounds II have average molecular weights $M_n$ of 600 to 1500.

**5.** Addition compounds and salts thereof according to claims 3 or 4, characterised in that the polyoxyalkylene glycol is a polyethylene glycol.

**6.** A method of producing addition compounds and salts thereof which are suitable as dispersing agents, by the reaction of polyisocyanates, hydroxy compounds, compounds with a pKa value of 5 to 14 which contain Zerewitinoff hydrogen as well as at least one basic group, and optionally compounds which contain amino hydrogen, optionally in the presence of solvents and optionally in the presence of reaction catalysts, characterised in that polyisocyanates having an average functionality of 3 to 6 are reacted

a) with monohydroxy compounds of formula I

$$Y\text{-}OH \qquad I$$

wherein Y has the following meanings:

i) aliphatic and/or cycloaliphatic hydrocarbon groups containing 8 to 30 carbon atoms, the hydrogen atoms of which can be replaced in part by halogens and/or aryl radicals,
ii) aliphatic, cycloaliphatic and/or aromatic groups which contain at least one -O- and/or -COO- group and which have molecular weights of 350 to 8000, wherein the hydrogen atoms can be replaced in part by halogens,

in an amount such that on average at least 0.8 molecules of formula I are allotted to each molecule of polyisocyanate, but such that on average at least 2 isocyanate groups of each molecule of polyisocyanate remain unreacted, with the proviso that 20 to 50 % of the NCO groups are reacted,

b) the reaction product obtained is reacted with compounds of formula II

$$G\text{-}(E)_n \qquad II$$

wherein E represents -OH, $-NH_2$ and/or -NHR (wherein R represents an alkyl group containing 1 to 4 carbon atoms), n represents 2 or 3, and G represents an aliphatic, cycloaliphatic and/or aromatic group with a molecular weight of 3000 at most, which contains at least 2 carbon atoms, and which can contain -O-, -COO-, -CONH-, -S- and/or $SO_2$ groups, in an amount such that 0.8n to 1.1n molecules of polyisocyanate are allotted to 1 molecule of formula II, but such that on average at least one isocyanate group of each molecule of polyisocyanate remains unreacted, but that the sum of the degrees of NCO reaction of reactions a) and b) is 75 % as a maximum, with the proviso that a further 22 % - 36 % of the NCO groups of the polyisocyanates originally used are reacted, and the sum of the degrees of reaction of reactions a) and b) is at least 45 %,

c) the reaction product obtained is reacted with compounds from the group comprising N,N-diethyl-1,4-butanediamine, 1-(2-aminoethyl)piperazine, 2-(1-pyrrolidyl)-ethylamine, 4-amino-2-methoxy-pyrimidine, 2-dimethylaminoethanol, 1-(2-hydroxyethyl)piperazine, 4-(2-hydroxyethyl)morpholine, 2-mercaptopyrimidine, 2-mercaptobenzimidazole, N, N-dimethyl-1,3-propanediamine, 4-(2-aminoethyl)pyridine, 2-amino-6-methoxybenzothiazole, 4-aminomethyl-pyridine, N,N-diallylmelamine, 3-amino-1,2,4-triazole, 1-(3-aminopropyl) imidazole, 4-(2-hydroxyethyl)pyridine, 1-(2-hydroxyethyl)imidazole and 3-mercapto-1,2,4-triazole or salts thereof, in an amount such that the remaining isocyanate groups are reacted.

**7.** A method according to claim 6, characterised in that the monohydroxy compounds of formula I are polyesters with average molecular weights $M_n$ of 500 to 5000, which are preferably formed from aliphatic lactones and aliphatic monoalcohols containing 4 to 18 carbon atoms.

**8.** A method according to claims 6 or 7, characterised in that the compounds of formula II are polyoxyalkylene glycols, preferably with average molecular weights $M_n$ of 400 to 2000.

**9.** A method according to claim 8, characterised in that compounds II have average molecular weights $M_n$ of 600 to 1500.

**10.** A method according to claims 8 or 9, characterised in that the polyoxyalkylene glycol is a polyethylene glycol.

**11.** The use of the addition compounds and salts thereof according to claims 1 to 10 as dispersing agents.

**12.** Pulverulent or fibrous solids which are coated with dispersing agents and which are to be incorporated in liquid systems, characterised in that they are coated with addition compounds or salts thereof according to claims 1 to 5.

**13.** Pulverulent solids according to claim 12, characterised in that the solids are pigments.

**Revendications**

**1.** Composés d'addition et leurs sels convenant à l'utilisation en tant qu'agents dispersants, qu'on obtient en faisant réagir des polyisocyanates, des composés hydroxylés, des composés contenant de l'hydrogène de Zerewitinoff et au moins un groupe basique et ayant un pKa de 5 à 14 et le cas échéant de composés contenant de l'hydrogène d'amine, éventuellement en présence de solvants et éventuellement en présence de catalyseurs de la réaction, caractérisés en ce qu'on les obtient en faisant réagir des polyisocyanates de fonctionnalité moyenne 3 à 6

a) avec des composés monohydroxylés de formule I

$$Y\text{-}OH \qquad I$$

dans laquelle Y a les significations suivantes

i) groupes hydrocarbonés aliphatiques et/ou cycloaliphatiques en C8-C30 dont les atomes d'hydrogène peuvent être remplacés en partie par des halogènes et/ou des groupes aryle,

ii) groupes aliphatiques, cycloaliphatiques et/ou aromatiques contenant au moins un pont -O- et/ou -COO-, à des poids moléculaires de 350 à 8000, les atomes d'hydrogène pouvant être remplacés en partie par des atomes d'halogènes,

en quantité telle qu'on dispose d'au moins 0,8 molécules de formule I pour une molécule de polyisocyanate mais qu'en moyenne, dans chaque molécule de polyisocyanate, au moins deux groupes isocyanates restent non convertis,
sous réserve que 20 à 50% des groupes NCO ont réagi,

b) en faisant réagir le produit de réaction obtenu avec des composés de formule II

G-(E)n II

dans laquelle E représente -OH, $-NH_2$ et/ou -NHR (R étant un groupe alkyle en C1-C4) et n est égal à 2 ou 3, et Z représente un groupe aliphatique, cycloaliphatique et/ou aromatique à au moins deux atomes de carbone, à un poids moléculaire de 3000 au maximum, qui peut contenir des ponts -O-, -COO-, -CONH-, et/ou $-SO_2-$, en quantité telle que l'on dispose de 0,8 n à 1,1 n molécule de polyisocyanate pour une molécule de formule II mais qu'en moyenne, dans chaque molécule de polyisocyanate, au moins un groupe isocyanate reste non converti, la somme des taux de conversion des groupes NCO dans les réactions a) et b) étant au maximum de 75 %, sous réserve qu'une autre fraction de 22 à 36 % des groupes NCO des polyisocyanates mis en oeuvre à l'origine ont réagi, et que la somme des taux de conversion des réactions a) et b) est d'au moins 45 %,

c) en faisant réagir le produit de réaction obtenu avec un composé du groupe de la N,N-diéthyl-1,4-butanediamine, la 1-(2-aminoéthyl)pipérazine, la 2-(1-pyrrolidyl)éthylamine, la 4-amino-2-méthoxy-pyrimidine, le 2-diméthylaminoéthanol, la 1-(2-hydroxyéthyl)pipérazine, la 4-(2-hydroxyéthyl)morpholine, la 2-mercaptopyrimidine, le 2-mercaptobenzimidazole, la N,N-diméthyl-1,3-propanediamine, la 4-(2-aminoéthyl)pyridine, le 2-amino-6-méthoxybenzothiazole, la 4-aminométhylpyridine, la N,N-diallylmélamine, le 3-amino-1,2,4-triazole, le 1-(3-aminopropyl)imidazole, la 4-(2-hydroxyéthyl)pyridine, le 1-(2-hydroxy-éthyl)imidazole et le 3-mercapto-1,2,4-triazole, en quantité telle que les groupes isocyanates restants réagissent.

**2.** Composés d'addition et leurs sels selon la revendication 1, caractérisés en ce que les composés monohydroxylés de formule I sont des polyesters de poids moléculaires moyen $M_n$ 500 à 5000, de préférence obtenus à partir de lactones aliphatiques et de monoalcools aliphatiques en C4-C18.

**3.** Composés d'addition et leurs sels selon la revendication 1 ou 2, caractérisés en ce que les composés de formule II sont des polyoxyalkylèneglycols, de préférence à des poids moléculaires moyens $M_n$ de 400 à 2000.

**4.** Composés d'addition et leurs sels selon la revendication 3, caractérisés en ce que les composés II ont des poids moléculaires moyens $M_n$ de 600 à 1500.

**5.** Composés d'addition et leurs sels selon la revendication 3 ou 4, caractérisés en ce que le polyoxyalkylèneglycol est un polyésthylèneglycol.

**6.** Procédé de préparation de composés d'addition et leurs sels appropriés à l'utilisation en tant qu'agents dispersants par réaction de polyisocyanates, de composés hydroxylés, de composés contenant de l'hydrogène de Zerewitinoff et au moins un groupe basique et ayant un pKa de 5 à 14 et le cas échéant de composés contenant de l'hydrogène d'amine, éventuellement en présence de solvants et éventuellement en présence de catalyseurs de la réaction, caractérisé en ce que l'on fait réagir des polyisocyanates ayant une fonctionnalité moyenne de 3 à 6,

a) avec des composés monohydroxylés de formule I

Y-OH I

dans laquelle Y a les significations suivantes :

i) groupes hydrocarbonés aliphatiques et/ou cycloaliphatiques en C8-C30 dont les atomes d'hydrogène peuvent être remplacés en partie par des halogènes et/ou des groupes aryle,

ii) groupes aliphatiques, cycloaliphatiques et/ou aromatiques contenant au moins un pont -O- et/ou -COO-, à des poids moléculaires de 350 à 8000, les atomes d'hydrogène pouvant être remplacés en partie par des halogènes,

en quantité telle qu'on dispose en moyenne d'au moins 0,8 molécule de formule I pour chaque molécule de polyisocyanate mais qu'en moyenne, dans chaque molécule de polyisocyanate, au moins deux groupes isocyanates restent non convertis, sous réserve que 20 à 50 % des groupes NCO réagissent,

b) on fait réagir le produit de réaction obtenu avec des composés de formule II

$$G(E)_n \qquad II$$

dans laquelle E représente -OH, $-NH_2$ et/ou -NHR (R étant un groupe alkyle en C1-C4) et n est égal à 2 ou 3, et G est un groupe aliphatique, cycloaliphatique et/ou aromatique contenant au moins deux atomes de carbone, à un poids moléculaire de 3000 au maximum et qui peut contenir des ponts -O-, -COO-, -CONH-, -S- et/ou $SO_2$-, en quantité telle qu'on dispose de 0,8 n à 1,1 n molécule du polyisocyanate pour une molécule de formule II mais qu'en moyenne, dans chaque molécule de polyisocyanate, au moins un groupe isocyanate reste non converti, la somme des taux de conversion des groupes NCO dans les réactions a) et b) étant au maximum de 75 %, sous réserve qu'une autre fraction de 22 à 36 % des groupes NCO des polyisocyanates mis en oeuvre à l'origine réagissent et que la somme des taux de conversion des réactions a) et b) soit d'au moins 45 %,

c) on fait réagir le produit de réaction obtenu avec un composé du groupe de la N,Ndiéthyl-1,4-butanediamine, la 1-(2-aminoéthyl)pipérazine, la 2-(1-pyrrolidyl)-éthylamine, la 4-amino-2-méthoxy-pyrimidine, le 2-diméthylaminoéthanol, la 1-(2-hydroxyéthyl)pipérazine, la 4-(2-hydroxyéthyl)morpholine, la 2-mercaptopyrimidine, le 2-mercapto-benzimidazole, la N,N-diméthyl-1,3-propanediamine, la 4-(2-aminoéthyl)pyridine, le 2-amino-8-méthoxybenzothiazole, la 4-aminométhylpyridine, la N,N-diallylmélamine, le 3-amino-1,2,4-triazole, la 1-(3-aminopropyl)imidazole, la 4-(2-hydroxyéthyl)pyridine, le 1-(2-hydroxyéthyl)imidazole et le 3-mercapto-1,2,4-triazole ou leurs sels en quantité telle que les groupes isocyanates restants réagissent.

**7.** Procédé selon la revendication 6, caractérisé en ce que les composés monohydroxylés de formule I sont des polyesters ayant des poids moléculaires moyens $M_n$ de 500 à 5000, obtenus de préférence à partir de lactones aliphatiques et de monoalcools aliphatiques en C4-C18.

**8.** Procédé selon la revendication 6 ou 7, caractérisé en ce que les composés de formule II sont des polyoxyalkylèneglycols, de préférence à des poids moléculaires $M_n$ de 400 à 2000.

**9.** Procédé selon la revendication 8, caractérisé en ce que les composés II ont des poids moléculaires moyens $M_n$ de 600 à 1500.

**10.** Procédé selon la revendication 8 ou 9, caractérisé en ce que le polyoxyalkylène-glycol est un polyéthylèneglycol.

**11.** Utilisation des composés d'addition et leurs sels selon les revendications 1 à 10 en tant qu'agents dispersants.

**12.** Substances solides pulvérulentes ou fibreuses à incorporer dans des milieux liquides et qui sont revêtues par des agents dispersants, caractérisées en ce qu'elles sont revêtues par des composés d'addition ou leurs sels selon les revendications 1 à 5.

**13.** Substances solides pulvérulentes selon la revendication 12, caractérisées en ce qu'elles consistent en des pigments.